(19) Europäisches Patentamt
European Patent Office
Office européen des brevets

(11) **EP 2 834 664 B1**

(12) **FASCICULE DE BREVET EUROPEEN**

(45) Date de publication et mention de la délivrance du brevet:
**06.04.2016 Bulletin 2016/14**

(51) Int Cl.:
**G01S 13/34** [(2006.01)]    **G01S 13/90** [(2006.01)]

(21) Numéro de dépôt: **13706280.8**

(22) Date de dépôt: **28.02.2013**

(86) Numéro de dépôt international:
**PCT/EP2013/054041**

(87) Numéro de publication internationale:
**WO 2013/127926 (06.09.2013 Gazette 2013/36)**

(54) **RADAR À FAIBLE PROBABILITÉ D'INTERCEPTION**

RADAR MIT GERINGER STÖRUNGSWAHRSCHEINLICHKEIT

RADAR WITH LOW INTERCEPTION PROBABILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2012 FR 1200627**

(43) Date de publication de la demande:
**11.02.2015 Bulletin 2015/07**

(73) Titulaire: **THALES**
**92200 Neuilly-sur-Seine (FR)**

(72) Inventeurs:
• **CORNIC, Pascal**
**F-29820 Guilers (FR)**
• **KEMKEMIAN, Stéphane**
**F-75014 Paris (FR)**
• **ARTIS, Jean-Paul**
**F-29280 Plouzane (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 0 893 703     EP-A1- 2 296 007**
**EP-A2- 2 296 006**

• **CHEVALIER F L ET AL: "Coloured transmission for radar active antenna", REE: REVUE GENERALE DE L'ELECTRICITE ET DE L'ELECTRONIQUE, REVUE GENERALE DE L'ELECTRICITE S.A, FR, no. 6, 1 mars 2005 (2005-03-01), pages 48-52, XP001536744, ISSN: 1265-6534, DOI: 10.3845/REE.2005.024**
• **ANDERSSON B E ET AL: "FMCW and super resolution techniques applied to an LPI short range air search radar", RADAR '97. EDINBURGH, OCT. 14 - 16, 1997; [IEE CONFERENCE PUBLICATION], LONDON : IEE, GB, vol. NO. 449, 14 octobre 1997 (1997-10-14) , pages 406-410, XP006508978, DOI: 10.1049/CP:19971706 ISBN: 978-0-85296-698-3**

**Description**

L'invention concerne les radars à faible probabilité d'interception qui sont difficilement détectables.

Elle s'applique pour des radars ayant une fonction SAR.

Il existe aujourd'hui des radars à faible probabilité d'interception, en abrégé L .P.I (abréviation anglo-saxonne de Low Probability of Intercept), qui utilisent pour la plupart des techniques d'émission continue ou quasi continue, visant à réduire la puissance crête émise.

Ces techniques d'émission continue, lorsqu'elles sont employées seules, peuvent être contrées par la mise en oeuvre de détecteurs modernes utilisant des traitements adaptés permettant une intégration cohérente du signal sur un temps long, typiquement de une à quelques dizaines de ms.

D'autre part, les radars à ondes continues présentent un inconvénient majeur, relatif au couplage entre l'émission et la réception qui sont simultanées, ce qui tend à fortement limiter leur utilisation dès que la portée demandée est importante, typiquement au-delà d'une à quelques dizaines de kms. Un premier problème à résoudre est donc de renforcer le caractère de « discrétion » des radars afin que leur détection soit la plus difficile possible. Un deuxième problème est d'augmenter la portée des radars discrets.

De part leur conception, les radars LPI précités sont difficilement détectables. Ces radars sont classiquement des radars à ondes continues, à modulation de fréquence FMCW (abréviation anglo-saxonne de Frequency Modulated Continuous- Wave) ou FSK (abréviation anglo-saxonne de Frequency Shift Keying), ou encore à modulation de phase de type PSK (Phase Shift Keying) ou de type Barker connu de l'Homme du métier. Les radars LPI sont difficilement détectables par les détecteurs classiques qui recherchent la détection d'impulsion radar de forte puissance crête. Par ailleurs, les radars à émission continue ou quasi continue sont limités en portée, du fait des fuites entre l'émetteur et le récepteur.

Le brevet EP 2 296 006 du demandeur décrit un radar aéroporté à large couverture angulaire, pour la fonction de détection et d'évitement d'obstacle. Les caractéristiques de ce radar sont, au niveau du dispositif d'émission, de disposer d'éléments rayonnants qui focalisent un faisceau d'émission, les réseaux étant parallèles entre eux, et les éléments rayonnants étant commandés pour produire un balayage électronique du faisceau d'émission en élévation et une émission colorée en élévation.

Dans la suite de la description, l'expression « sous-réseau élémentaire » désigne un ensemble constitué de plusieurs éléments antennaires émetteurs ou récepteurs. Un réseau d'antennes ou antenne est constitué de N sous-réseaux élémentaires en émission ou M sous-réseaux en réception. La structure des antennes ou réseau d'antennes en émission ou en réception est de type Multiple Entrée Multiple Sortie ou MIMO connu de l'Homme du métier. Les sous-réseaux élémentaires peuvent être repérés dans l'antenne par un indice.

Le mot « chirp » désigne dans la présente description une rampe de fréquence.

L'idée de la présente invention est notamment d'offrir un radar ayant une structure permettant d'émettre une énergie sans focalisation ou avec une faible focalisation dans au moins un plan à l'émission, à faible puissance crête et dans une grande largeur de bande de fréquence, ce qui rend son interception extrêmement difficile. L'architecture du radar selon l'invention comporte notamment des antennes réseau à l'émission et à la réception de type multiple entrée multiple sortie ou MIMO associé à une technique d'étalement fréquentiel, spatial et temporel.

L'invention a pour objet un radar comprenant au moins une antenne d'émission constituée de N sous-réseaux élémentaires non directifs dans au moins un plan à l'émission, et une antenne de réception constituée de M sous-réseaux élémentaires, les émissions des sous-réseaux sont orthogonales entre elles du fait de leur séparation fréquentielle et couvre chacune une sous-bande de même largeur $\Delta F/N$, lesdites sous-bandes correspondantes étant disjointes les unes des autres, le radar comportant:

Au niveau de l'antenne d'émission

Un sous-réseau élémentaire de l'antenne d'émission est relié à un générateur de forme d'onde,

Au moins un oscillateur en liaison avec les N générateurs de forme d'onde associés aux N sous-réseaux élémentaires, formant un ensemble adapté à générer pour chacun des sous-réseaux élémentaires une forme d'onde telle que chacun des sous-réseaux élémentaires émet des signaux continus ou quasi-continus selon un motif temporel et périodique de façon telle que :

- Le motif d'émission couvre une bande passante $\Delta F$ pendant une durée donnée Tm,
- Le motif d'émission est composé de N sous-motifs différents les uns des autres, la durée d'un motif étant égale à Tm/N, et couvre une sous-bande de la bande de fréquence totale $\Delta F$,
- Les motifs émis par les différents sous-réseaux se déduisent les uns des autres par retards élémentaires qui sont des multiples de Tm/N, les N sous-motifs émis par les sous-réseaux étant différents pendant chaque intervalle de temps de durée Tm/N,

<u>Au niveau de l'antenne de réception</u>

Chacun des M sous-réseaux élémentaires de l'antenne de réception est adapté à capter les signaux réfléchis issus de l'émission des N sous-réseaux élémentaires de l'antenne d'émission,

L'antenne de réception comprend des moyens adaptés à réaliser une compression du signal reçu dans l'espace et dans le temps.

L'oscillateur peut être adapté pour générer au niveau des sous-réseaux élémentaires des émissions simultanées dans des bandes de fréquence différentes et disjointes.

Chaque sous-réseau est, par exemple, adapté pour couvrir l'ensemble de la bande passante ΔF au cours d'un motif Tm.

Le motif d'émission est, par exemple, une rampe de fréquence.

Selon un mode de réalisation, les N générateurs de forme d'onde sont indépendants.

Le radar comporte, par exemple, au niveau de la réception des moyens de filtrage fréquentiel adaptés à réduire les fuites d'émission des différents sous réseaux d'émission.

Le radar peut comporter un seul oscillateur pilote en liaison avec les N générateurs d'onde, ledit oscillateur étant adapté à réaliser la synchronisation d'émission des motifs.

Le radar selon l'invention comporte, par exemple, une fonction radar SAR.

L'invention concerne aussi un procédé permettant d'atténuer la détection d'un radar caractérisé en ce que ledit procédé est mis en oeuvre au sein d'un radar présentant au moins une des caractéristiques précitées et en qu'il comporte une étape consistant à étaler l'énergie produite par un radar dans le temps, l'espace et le domaine fréquentiel.

Le procédé peut comporter au moins les étapes suivantes :

- Au niveau d'une antenne d'émission constituée de N sous-réseaux élémentaires non directifs dans au moins un plan à l'émission reliés chacun à un générateur de forme d'onde,

    ○ générer pour chacun des sous-réseaux élémentaires une forme d'onde telle que chacun des sous-réseaux élémentaires émet des signaux continus ou quasi-continus selon un motif temporel et périodique de façon telle que :

        ▪ utiliser un motif d'émission couvrant une bande passante ΔF pendant une durée Tm,
        ▪ le motif d'émission est composé de N sous-motifs différents les uns des autres, la durée d'un motif étant égale à Tm/N,
        ▪ les motifs émis par les différents sous-réseaux se déduisent les uns des autres par retards élémentaires qui sont des multiples Tm/N, les N sous-motifs émis par les sous-réseaux étant différents pendant chaque intervalle de temps de durée Tm/N,

- Au niveau de l'antenne de réception comprenant M sous-réseaux élémentaires adaptés à capter les signaux réfléchis issus de l'émission des N sous-réseaux élémentaires de l'antenne d'émission,

    ○ réaliser une compression du signal reçu dans l'espace et dans le temps des signaux reçus.

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1, la représentation d'un train d'onde émis par un sous-réseau antennaire de rang i,
- La figure 2, un exemple des signaux émis au cours du temps à partir des différents sous-réseaux de l'antenne d'émission, pour le motif élémentaire de la figure 1,
- La figure 3, un exemple de signal émis par un sous-réseau élémentaire,
- La figure 4, un schéma d'occupation spectrale,
- La figure 5A, un exemple de configuration de N sous-réseaux à l'émission et la figure 5B M sous-réseaux antennaires à la réception,
- La figure 6, un exemple d'architecture pour la commande des générateurs de forme d'onde,
- La figure 7, un exemple de répartition de sous-motifs,
- La figure 8, un cas particulier où le même motif alimente les différents sous-réseaux,
- La figure 9, un exemple de sous-motifs affectés dans un ordre quelconque à l'émission des sous-réseaux,
- La figure 10, une représentation des retards de propagation,
- La figure 11, un mode de réalisation pour le filtrage à l'arrivée des signaux,

- La figure 12, un exemple des étapes de traitement des signaux à la réception.

Avant de décrire un exemple de radar selon l'invention et sa mise en oeuvre, quelques rappels sur les principes utilisés à l'émission et à la réception du signal vont être exposés pour un radar comprenant au niveau de l'émetteur une antenne réseau à l'émission et une antenne réseau à la réception conformément aux architectures MIMO précitées. Chacune de ces antennes est constituée, par exemple de sous-réseaux identiques et non directifs dans au moins un plan à l'émission.

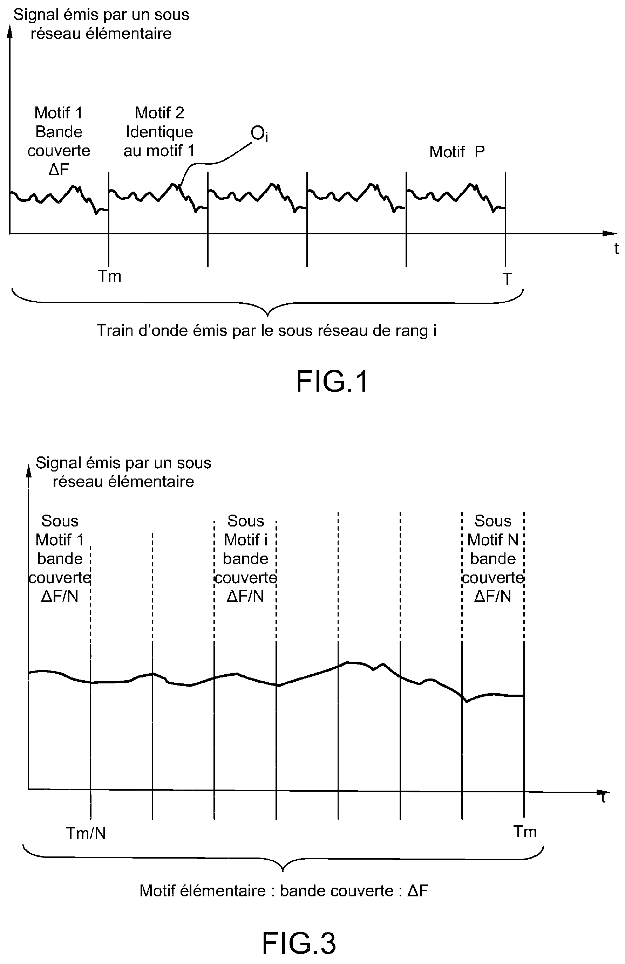

La figure 1 schématise dans un système d'axes où l'axe des abscisses représente le temps et l'axe des ordonnées l'amplitude du signal émis par un sous-réseau élémentaire, un train d'onde émis par le sous-réseau de rang i.

A l'émission, tous les sous-réseaux élémentaires de l'antenne d'émission émettent simultanément un même train d'onde sur une fréquence porteuse f, avec pour chaque sous-réseau élémentaire un retard $\tau$ différent par rapport à une origine des temps commune. Ce train d'onde émis par exemple par le sous-réseau de rang i, comme représenté sur la figure 1, est constitué d'une succession de motifs Oi, par exemple, identiques couvrant chacun une large bande de fréquence $\Delta F$ donnée pendant une période de temps Tm donnée. Les trains d'onde émis par les différents sous-réseaux sont tous retardés entre eux d'un pas régulier qui est fonction de l'indice du sous-réseau. Le retard $\tau$ correspond par exemple à Tm divisé par le nombre N de sous-réseaux d'émission. Sur cette figure, tous les motifs sont identiques.

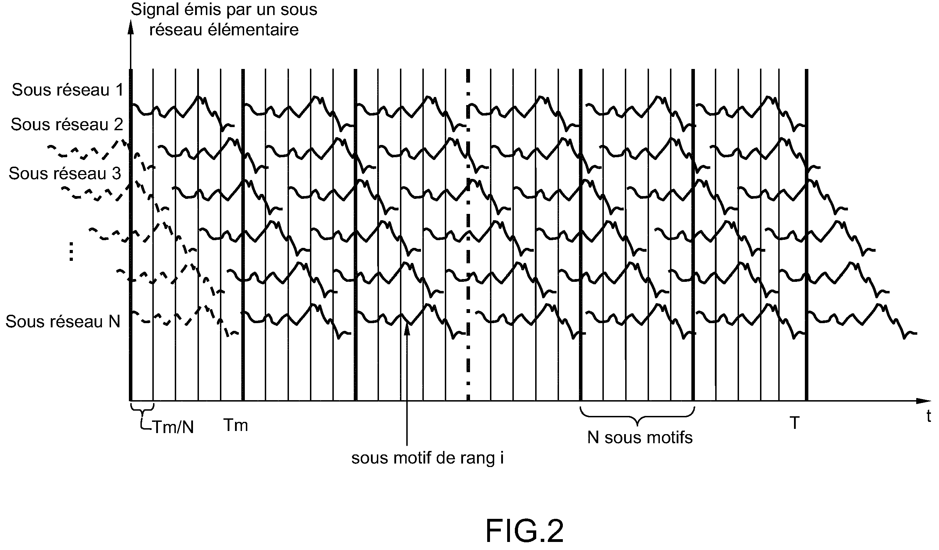

La figure 2 schématise un exemple des signaux émis au cours du temps à partir des différents sous-réseaux, pour le motif élémentaire de la figure 1.

Chaque motif est lui-même constitué de N sous-motifs différents les uns des autres, N étant égal au nombre de sous-réseaux, chaque sous-motif ayant la même durée Tm/N et couvrant une sous-bande de la bande de fréquence totale $\Delta F$. Les sous-bandes correspondant à des émissions orthogonales couvrent chacune une sous-bande de même largeur $\Delta F/N$ et sont disjointes les unes des autres, c'est-à-dire qu'il n'y a pas de recouvrement de signal entre deux sous-bandes consécutives. Ceci permet notamment à la suite des sous-motifs de couvrir la totalité de la bande $\Delta F$. La figure 3 donne un exemple de signal émis par un sous-réseau élémentaire pour un nombre de sous-motifs égal à 8 et $T_m=T/8$ dans un diagramme où l'axe des abscisses est un axe temporel et l'axe des ordonnées le signal émis par un sous-réseau élémentaire. Les motifs émis par les sous-réseaux élémentaires se déduisent les uns des autres par des retards élémentaires qui sont des multiples de Tm/N. On peut remarquer sur la figure 3 que tous les Tm/N, le sous-motif $O_1$, $O_2$, ... $O_8$ utilisé pour la bande couverte $\Delta F/N$ varie au cours du temps.

Pendant la durée d'un sous-motif, les émissions de tous les sous-réseaux sont orthogonales entre elles du fait de leur séparation fréquentielle et la bande couverte est $\Delta F/N$.

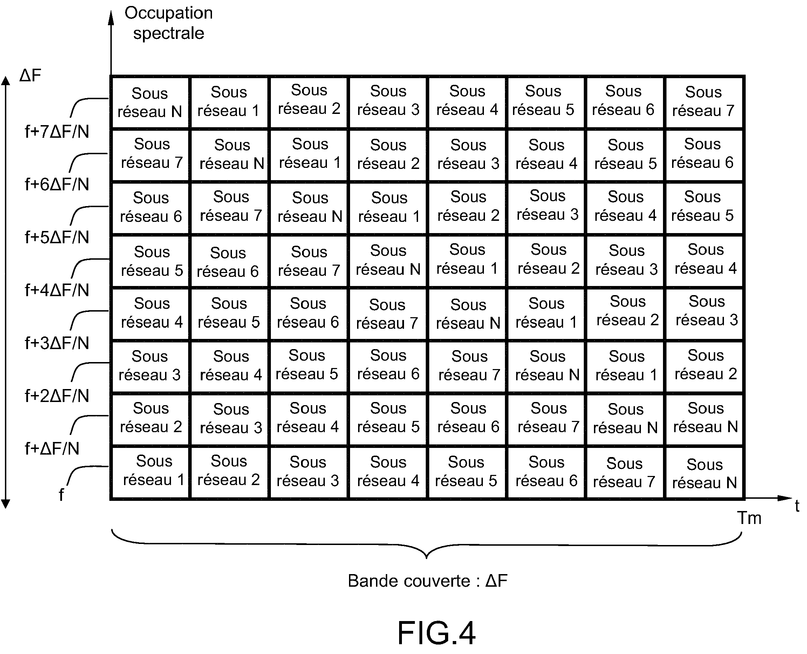

La figure 4 schématise l'occupation spectrale pour la totalité de la bande couverte $\Delta F$. L'axe des abscisses correspond au temps. Sur l'axe des ordonnées on a représenté pour un sous-réseau élémentaire la valeur du sous-motif à l'émission. Ainsi en considérant la première colonne, en partant du bas de l'axe des ordonnées, le motif de fréquence f est utilisé par le sous-réseau 1, le motif f+ $\Delta F/N$ par le sous-réseau 2, et ainsi de suite, le motif f+7 $\Delta F/N$ est utilisé par le sous-réseau N. Pour l'intervalle de temps suivant à 2Tm/N, le motif f est utilisé par le sous-réseau 2, motif f+7 $\Delta F/N$ est utilisé par le sous-réseau 1. Tous les sous-réseaux élémentaires émettent simultanément, de sorte que la bande couverte pendant la durée d'un sous-motif par l'ensemble des sous-réseaux 1 à N est égale à la bande totale couverte durant un motif complet par un seul sous-réseau. Sur la figure 4, le nombre des sous-réseaux est égal à 8.

L'ordre d'affectation des sous motifs aux sous-réseaux élémentaires peut être quelconque, sous la seule condition, qu'à chaque période de temps correspondant à la durée d'un sous-motif, toute la bande d'émission soit couverte.

Par ce procédé d'émission, les différents sous-réseaux émettent des ondes orthogonales, et le gain d'antenne résultant est le gain d'une antenne d'un sous réseau élémentaire.

A la réception, chaque sous-réseau élémentaire d'indice j capte les signaux réfléchis par un obstacle en réponse aux signaux émis par les N sous-réseaux élémentaires. Les signaux sont ensuite soumis à un traitement, détaillé plus loin dans la description, qui réalise une compression du signal tridimensionnelle :

- sur le temps, compression d'impulsion,
- sur le faisceau d'antenne à l'émission, formation de faisceau à l'émission,
- sur le faisceau d'antenne en réception, formation de faisceau à la réception,
- sur la vitesse, traitement Doppler de récurrence à récurrence.

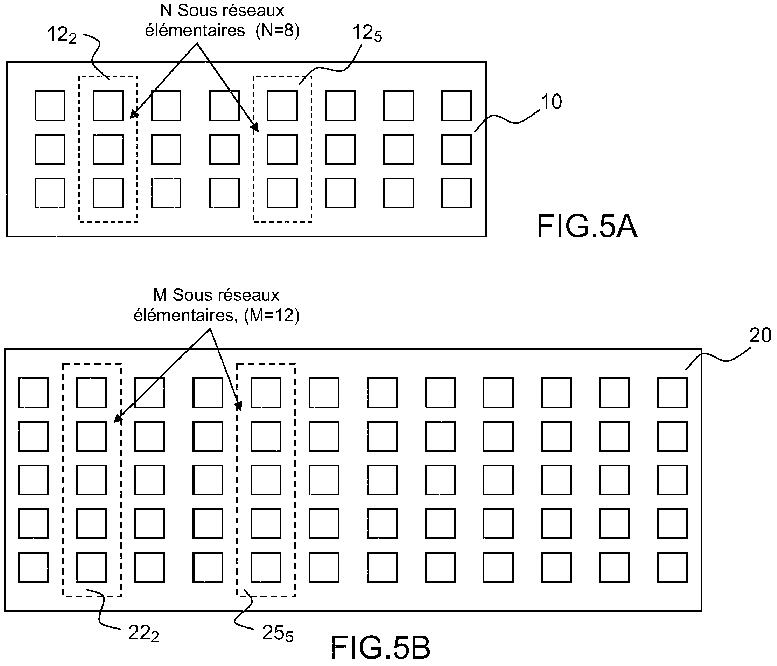

La figure 5A schématise une antenne d'émission 10 constituée de N sous-réseaux élémentaires 12i, sur la figure N=8. L'antenne d'émission est choisie pour être peu directive dans au moins un plan à l'émission.

La figure 5B représente un exemple d'antenne de réception 20 constituée de M sous-réseaux élémentaires 22j, dans cet exemple M=12. Dans cet exemple, les N sous-réseaux sont identiques et non directifs.

Il est possible d'avoir un nombre égal de sous-réseaux élémentaires à l'émission et à la réception, N=M.

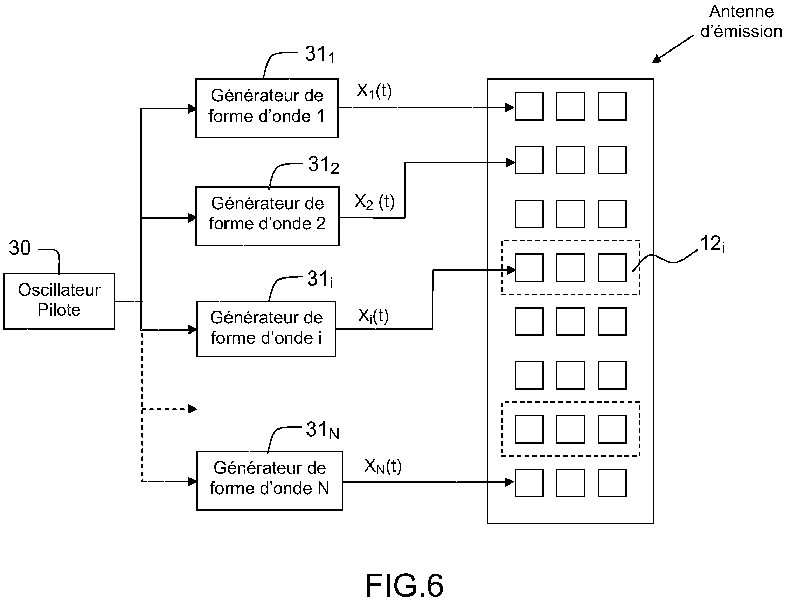

La figure 6 représente un exemple d'architecture pour l'émission du signal. Un oscillateur pilote 30 est relié à N générateurs 31i de forme d'onde. L'oscillateur pilote 30 a notamment pour fonction d'assurer la synchronisation d'émission des générateurs de forme d'onde. Il contrôle la phase des signaux émis pour qu'à la réception des signaux réfléchis par un obstacle, le procédé de séparation et le procédé de reconstruction des signaux puissent s'effectuer. Un générateur de forme d'onde 31 i est relié à un sous-réseau élémentaire d'indice i de l'antenne d'émission. Ainsi le générateur de forme d'onde $31_1$ va émettre le signal $X_1(t)$ vers le premier-sous réseau $12_1$ émetteur, et ainsi de suite jusqu'au générateur de forme d'onde $31_N$ qui émet l'onde $X_N(t)$ vers le sous-réseau élémentaire d'indice N.

Le train d'onde utilisé a une durée T et il est constitué de N motifs périodiques de durée Tm et de période Tr, chaque motif couvrant une bande d'émission ΔF au cours d'une période Tr.

Le motif peut être constitué d'une porteuse de fréquence f modulée en fréquence ou en phase, avec comme condition qu'il puisse être découpé temporellement en N sous-motifs adjacents, chaque sous-motif occupant une sous-bande différente de largeur ΔF/N. On a un nombre N de sous-motifs égal au nombre N de sous-réseaux élémentaires.

Au niveau de l'antenne de réception, le radar selon l'invention comporte un générateur de forme d'onde, adapté à reproduire la forme du signal d'émission de l'un quelconque des sous réseaux d'émission.

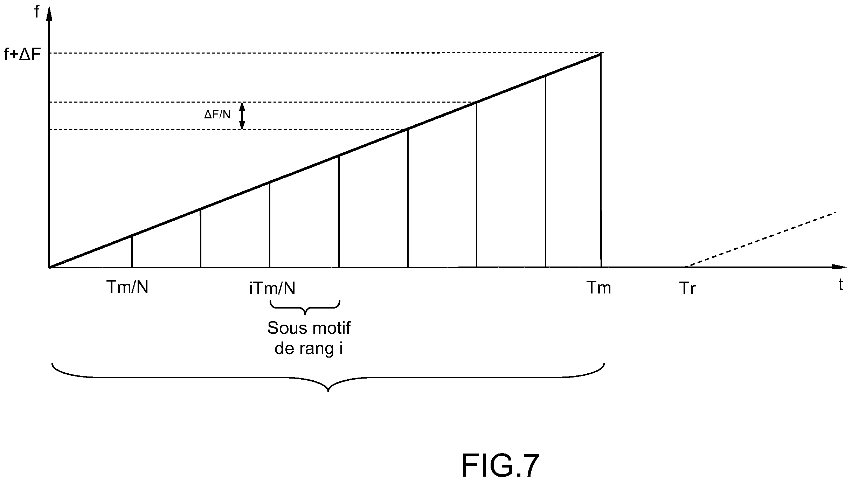

Un exemple de forme d'onde est représenté à la figure 7 dans un diagramme où l'axe des abscisses correspond au temps et qui montre un motif élémentaire constitué d'une rampe de fréquence décomposée elle-même en sous-bandes de fréquence d'amplitude ΔF/N correspondant à N sous motifs.

Selon un mode de réalisation, les rampes de fréquence se reproduisent de façon périodique selon une période Tr. Le signal émis peut être interrompu, ou continu si la durée du motif est égale à la durée de la période Tr. Ceci permet notamment d'utiliser toute la puissance disponible au niveau de l'émetteur, et de disperser l'énergie émise sur le maximum de temps. Dans l'exemple de la figure le signal émis est interrompu pendant une durée d'environ Tm/N et reprend au point Tr.

Durant chaque tranche de temps Tm/N, chaque sous-motif $O_k$ d'indice k est utilisé pour alimenter l'émission d'un sous-réseau $12_i$ d'indice i donné.

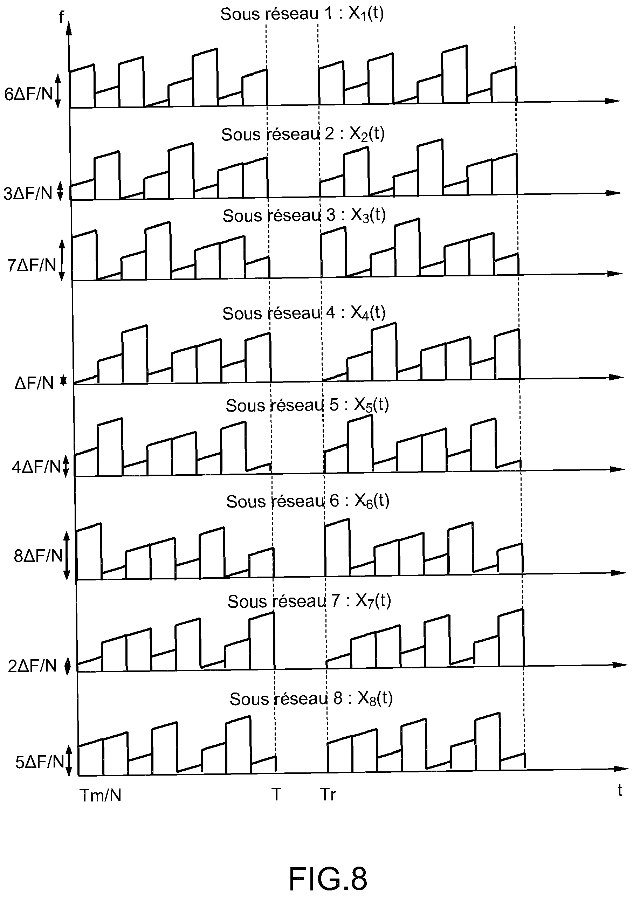

La figure 8 représente un exemple de répartition des différents sous-motifs à l'émission dans un diagramme où l'axe des abscisses est l'axe temporel et l'axe des ordonnées représente pour un sous-réseau donné l'amplitude des motifs affectés à un sous-réseau donné. Les différents sous-motifs peuvent être affectés dans un ordre quelconque à l'émission des différents sous-réseaux.

Si l'on considère la ligne correspondant au sous-réseau X1 (t), on va trouver au cours du temps la succession des motifs suivants : 6 ΔF/N, 3 ΔF/N, 7 ΔF/N, ΔF/N, 4ΔF/N, 8ΔF/N, 2 ΔF/N, 5 ΔF/N pour la période 8*Tm/N.

Si l'on additionne les signaux émis par les N sous-réseaux élémentaire pour la période Tm/N, la valeur obtenue correspond à la somme des N signaux émis pour un sous-réseau élémentaire donné.

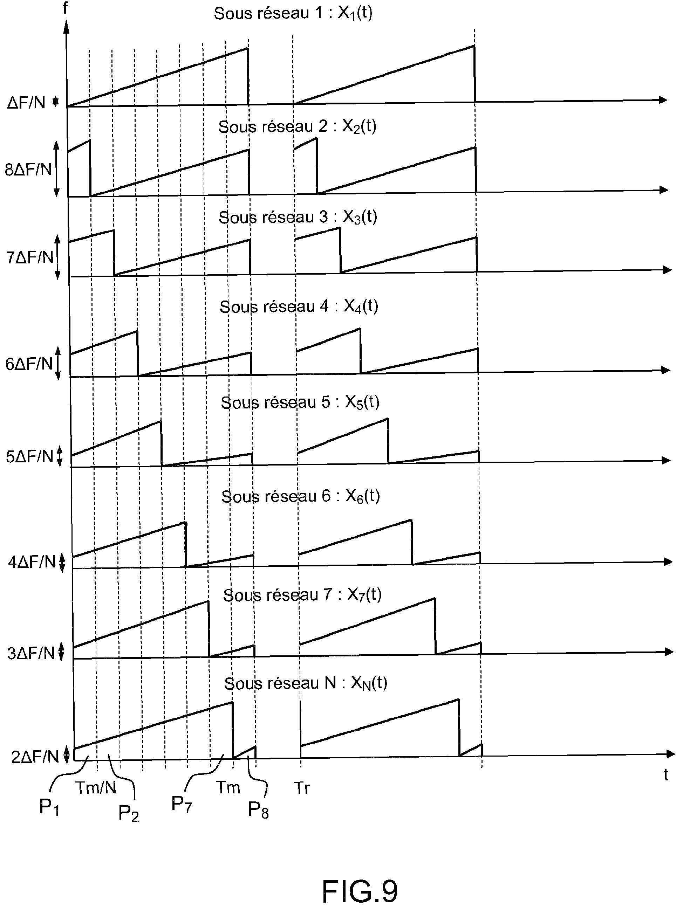

La figure 9 schématise un exemple de mise en oeuvre où un même motif « chirp » est utilisé pour alimenter les différents sous-réseaux avec un retard progressif variant selon un pas correspondant à Tm/N, c'est-à-dire la durée du motif divisée par le nombre de sous-réseaux.

En considérant le sous-réseau 1, $X_1$ (t) correspond à une rampe constituée d'une succession de rampes de durée Tm/N et d'amplitude commençant à ΔF/N, 2 ΔF/N, 3 ΔF/N,... 8 ΔF/N.

Le sous-réseau $X_2(t)$ est associé au motif 8 ΔF/N sur une durée Tm/N suivi des motifs ΔF/N, 2 ΔF/N, 3 ΔF/N,...7 ΔF/N.

Le sous-réseau N est associé à la succession de motifs 2 ΔF/N,..., 8 ΔF/N, ΔF/N.

Les signaux d'émission des différents sous-réseaux se déduisent ainsi les uns des autres par une permutation circulaire de la forme

$$X_{i+k}(t)=X_i(t-kT_m/N) \quad (1)$$

De la même façon, la fréquence du signal émis par le sous réseau i à l'instant t est égale à

$$F_{i+k}(t)=F_i(t)-k\Delta F/N \quad (2)$$

Dans le domaine temporel, la condition d'orthogonalité s'écrit :

quelque soit l, quelque soit p

$$\int_{t}^{t+Tm/N} X_l(t)\overline{X}_P(t)dt = 0 \quad (3)$$

ce qui est vrai si ΔF=kN/Tm où k est un entier.

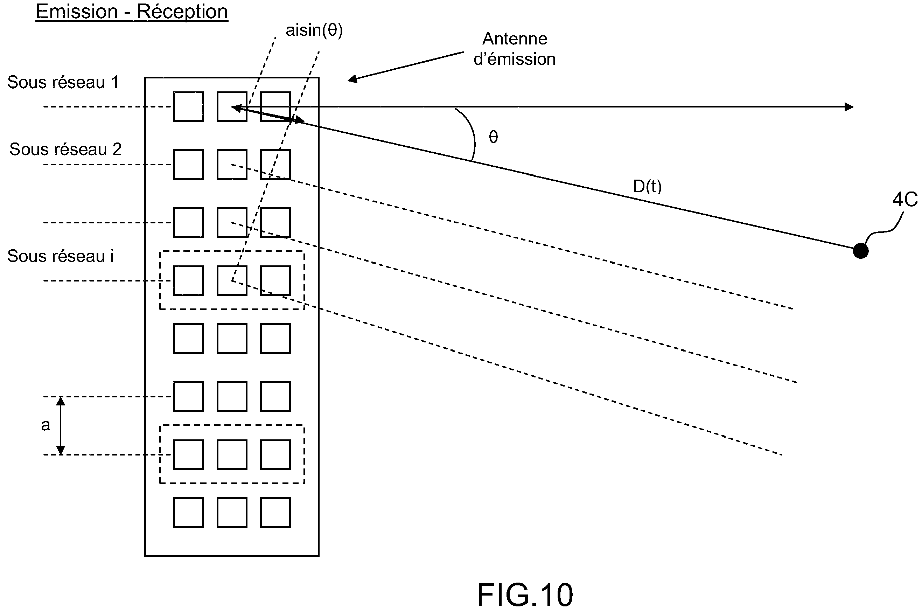

La figure 10 schématise la réception des signaux sur les M sous-réseaux élémentaires 22j de l'antenne de réception.

Le signal de réception $S_j$(t) du sous réseau j peut s'écrire sous la forme :

$$S_j(t) = A\sum_{i=1}^{N} X_i(t - \tau_{i,j}) \quad (4)$$

où

A correspond à un coefficient d'atténuation et $\tau_{i,j}$ correspond au retard de propagation entre l'émission sur le sous réseau i et la réception sur le sous réseau j.

Pour un sous réseau d'émission donné, le retard de propagation est fonction de la distance D(t) de la cible, la distance étant repérée par rapport au centre de phase du sous réseau, et de la direction θ de la cible 4C.

En supposant les sous réseaux d'émission et de réception très proches, on a pour un obstacle ou objet 4C à l'infini dans la direction θ par rapport à la normale à un alignement régulier de sous réseaux: le retard de propagation qui s'exprime par :

$$\tau_{i,j}(t) = \frac{2R(t) + ai\sin(\theta)}{C} \quad (5)$$

où

i est l'indice du sous réseau considéré, l'origine étant prise au centre de phase du premier sous réseau
a est la distance entre deux sous réseaux
C est la vitesse de la lumière

Le signal de réception du sous réseau j est corrélé à chaque récurrence Tr par filtrage adapté avec le signal d'émission d'un sous réseau i quelconque. Cette opération réalise une compression d'impulsion et correspond à une démodulation du signal reçu par la réplique du signal émis (de-ramping), suivie d'une transformée de Fourrier. L'opération s'écrit :

$$R_k(\tau_{i,j}) = \int_{kTr}^{kTr+Tm} (A\sum_{i=1}^{N} X_i(t - \tau_{i,j})).\overline{X}_i(t)e^{-2\pi jft}dt \quad (6)$$

où Tr est la période de récurrence et k l'indice de la période de récurrence à laquelle est effectuée la corrélation.

Les signaux Xi étant orthogonaux entre eux, le résultat se présente sous la forme d'une série de raies

$$R_{i,j} = A\sum_{i=1}^{N} \delta_{i,j}(f - f_{i,j})\exp^{2j\pi\phi_{i,j}}$$

qui sont présentes aux fréquences :

$$f_{i,j} = \frac{\Delta F \tau_{i,j}}{T_m} - \frac{(i-1)\Delta F}{N} \qquad (7)$$

et ont comme phases respectives

$$\varphi_{i,j} = 2\pi f \left(\tau_{i,j} - \frac{(i-1)T_m}{N}\right) \qquad (8)$$

où f est la fréquence porteuse
ou encore, en utilisant (5) :

$$\varphi_{i,j} = 2\pi f \left(\frac{2R(t) + ai\sin(\theta)}{C} - \frac{(i-1)T_m}{N}\right) \qquad (9)$$

En pratique la transformée de Fourrier s'effectue en numérique sur le signal digitalisé.

Les différentes raies correspondant aux signaux émis des N sous réseaux d'émission apparaissent dans N filtres distincts, grâce aux propriétés d'orthogonalité.

Il suffit alors de sommer les signaux en sortie de ces différents filtres après remise en phase, c'est-à-dire en multipliant par exp$^{-j\varphi i,j}$ pour réaliser la compression du faisceau à l'émission. Cette remise en phase s'effectue pour chaque distance D(t) et pour chaque direction de pointage θ, et correspond à une formation de faisceau par le calcul.

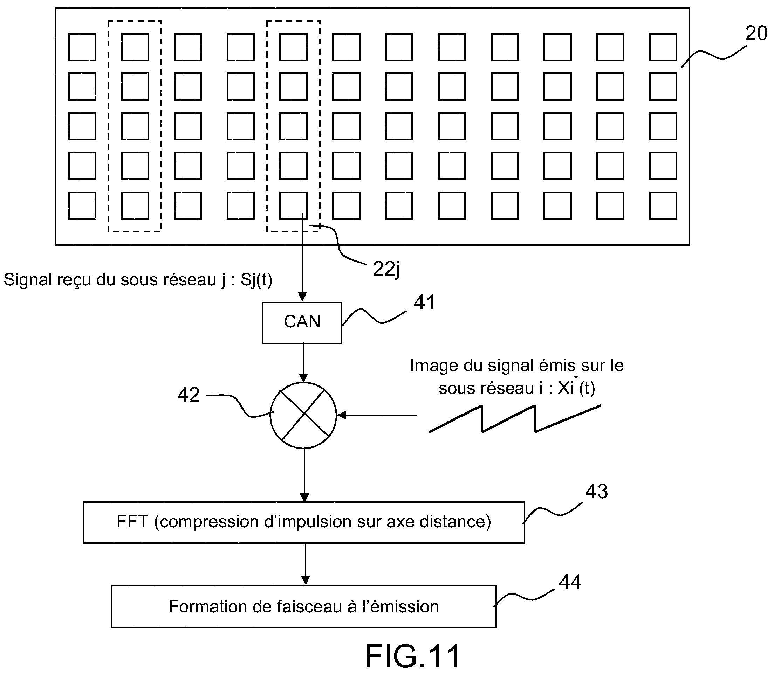

Le schéma de la figure 11 représente les opérations successives réalisées sur le signal reçu sur chaque sous réseau antennaire en réception. Le signal Sj(t) reçu par le sous-réseau j est converti 41 par un convertisseur analogique numérique en un signal numérique, puis il est corrélé avec l'image du signal émis sur le sous-réseau d'indice i. Une transformée de fourrier est ensuite réalisée 43.

A la sortie de ce traitement, les signaux reçus sont à chaque récurrence répartis en amplitude et en phase par case distance et par direction de faisceau à l'émission, et ceci pour chaque sous-réseau élémentaire de réception d'indice j. Il y a potentiellement un nombre Ncd=ΔT$_m$ de cases distance.

Il est alors possible de réaliser les traitements radar conventionnels, comme la formation de faisceau en réception avec l'ensemble des M sous réseaux de réception, ou un traitement doppler sur plusieurs récurrences.

Selon un autre mode de réalisation, le récepteur peut comporter un ou plusieurs étages à fréquence intermédiaire, la corrélation peut s'effectuer dans le domaine fréquentiel.

Un mode de réalisation préférentiel consiste à séparer par un premier filtrage passe bande les signaux avant codage et FFT de façon à réduire la fréquence d'échantillonnage et le nombre de points de la FFT.

Dans cette approche, on réalise N filtres adjacents de largeur ΔF/N en sortie du démodulateur, l'ensemble couvrant la bande de réception totale ΔF.

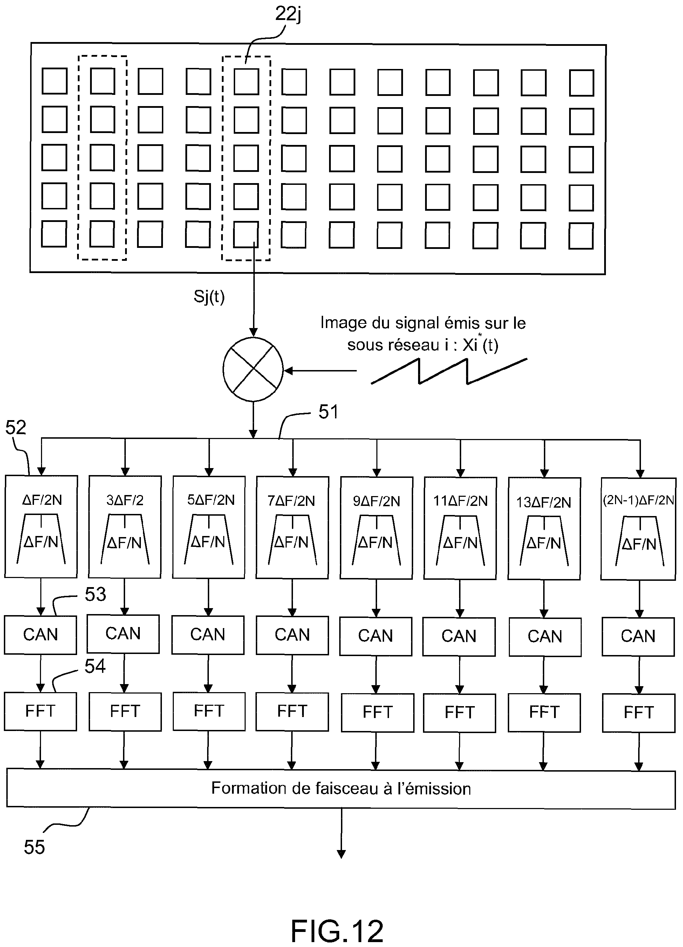

Un tel schéma est représenté figure 12. L'image du signal émis sur le sous-réseau i est X$_i$*(t). Après corrélation du signal Sj(t) avec l'image du signal émis, le signal résultant de la corrélation est réparti 51, en N sous-bandes spectrales. Chaque voie de réception correspond à un sous-réseau, les différentes sous-images sont tout d'abord filtrées 52, la fréquence centrale du filtre étant ΔF/2, puis chaque sous-image filtrée est convertie par un convertisseur analogique numérique 53, puis soumise à une transformée de fourrier rapide FFT 54. Les sous-images sont ensuite traitées 55 pour retrouver le faisceau à l'émission selon un traitement connu de l'Homme du métier.

Le radar selon l'invention présente notamment l'avantage de réduire les fuites d'émission des différents sous-réseaux d'émission qui se trouvent réparties spectralement sur N raies orthogonales. Ces fuites correspondant à un retard de propagation voisin de zéro, ces raies se situent aux positions 0, ΔF/N, 2ΔF/N, .....ΔF.

Au niveau d'un sous réseau de réception donné, ces fuites se somment en puissance, au lieu de s'additionner en phase, comme c'est le cas pour les radars à antenne réseau classique, où les ondes émises par chaque sous réseau d'émission sont identiques.

De même, les bruits portés par ces fuites sont générés par des générateurs de forme d'onde indépendants et se somment en puissance par exemple de configuration de la figure 6 qui représente plusieurs générateurs de formes d'onde, chacun étant associé à un sous-réseau d'émission. Ceci permet notamment de rendre les fuites d'émission vers la réception non cohérentes.

Chaque générateur de forme d'onde, GFO, porte un bruit, et les bruits sont indépendants d'un GFO à l'autre.

Chaque générateur de forme d'onde est lui même réalisé à l'aide d'au moins un oscillateur (VCO par exemple) et d'une boucle de phase commandée par un circuit de synthèse de phase numérique (DDS) non représenté sur la figure pour des raisons de simplification.

Les générateurs de forme d'onde GFO sont synchronisés par un même oscillateur de référence 30 (figure 6).

En notant $a_{i,j}$ le coefficient de couplage complexe entre le sous réseau d'émission i et le sous réseau de réception j et p la puissance d'émission élémentaire de chaque sous réseau, la puissance de la fuite captée par le sous réseau de rang j s'écrit $Pf = (\sum_{i=1}^{N} a_{i,j} \sqrt{p})^2$ pour le cas d'un radar selon l'art antérieur, ce qui correspond à une somme vectorielle des fuites reçues par chacun des sous-réseaux élémentaires, alors que

dans le cas d'un radar présentant la structure selon l'invention la puissance de fuite inférieure s'exprime :

$$Pf = \sum_{i=1}^{N} a_{i,j}^{2} p$$ ce qui permet avantageusement de détecter l'objet avec une meilleure sensibilité.

Dans le cas où les coefficients de couplage sont tous identiques : $a_{i,j}=a$, le niveau de fuite Pf est égal à Nap dans le premier cas et de $N^2$ap dans le second cas. La fuite est donc réduite dans un rapport N.

Il en va de même pour le bruit porté par la fuite, qui est lié aux défauts de pureté spectrale des oscillateurs.

Ces bruits étant à bande étroite et centrés sur les raies d'émission, une variante de réalisation consiste, par exemple, à ajouter au niveau de la chaîne de réception du radar, un filtre réjecteur connu de l'Homme du métier et placé en amont qui a notamment pour fonction d'éliminer ces raies et de réduire le niveau de bruit.

Une application possible du radar selon l'invention est celle d'un radar SAR (synthetic aperture) à haute résolution.

Dans cet exemple, il est possible de réaliser des rampes de fréquence de 1 GHz pour une résolution de 15 cm, sur une durée de l'ordre de $500\mu s$ pour une distance non ambiguë du radar de 75 kms.

L'émission est par exemple réalisée sur 32 sous-réseaux omnidirectionnels et la bande de 1 GHz est découpée en 32 sous-bandes de 34 MHz chacune.

Chaque sous-réseau émet une puissance élémentaire P, la puissance isotrope équivalente rayonnée est PIRE = 32 P.

Par étalement de la puissance sur le temps, la puissance crête Pc est réduite dans un rapport 10 par rapport à un radar classique de facteur de forme 10%. Compte tenu de la pente de la rampe de fréquence 1 Ghz/500 us, un système d'interception adapté à la détection aura une bande passante de l'ordre de 2 Mhz et ne percevra que la puissance crête correspondant à un seul canal de 34 Mhz, correspondant à l'émission d'un sous réseau non focalisé. L'énergie reçue dans un filtre de ce type sera donc réduite dans un rapport 32 par rapport à un radar émettant la même puissance sur un réseau focalisé. Le gain global en discrétion est de 320, soit 25 db.

Par ailleurs, dans le cas d'un radar SAR, le traitement peut être limité à un domaine distance réduit correspondant à la fauchée souhaitée et à une direction de visée unique, ce qui réduit considérablement le volume de calculs à effectuer sur le signal reçu

L'énergie émise par le radar selon l'invention est par exemple répartie dans un vaste domaine angulaire de l'ordre de 90°, dans une large bande de fréquence, par exemple 1 GHz et sur un temps long.

Le radar, objet de la présente invention présente notamment comme avantage de présenter une dispersion de l'énergie émise simultanément dans le temps, dans le domaine fréquentiel et dans l'espace tout en limitant l'effet des fuites d'émission vers la réception, grâce à un procédé particulier décrit dans ce qui suit.

La portée du radar selon l'invention se trouve accrue vis-à-vis des radars classiquement utilisés dans l'art antérieur.

Par rapport à un radar classique de même surface d'antenne d'émission émettant la même puissance totale, la puissance isotrope rayonnée équivalente est divisée dans un rapport N. Par rapport à un radar à émission continue LPI dont l'énergie est répartie sur une bande de fréquence $\Delta F$ pendant un temps Tm, la même bande de fréquence $\Delta F$ est couverte pendant un temps Tm/N ce qui réduit le rapport signal à bruit dans le filtre de détection dans un rapport N. L'étalement en fréquence est réalisé à la fois instantanément et sur la durée du motif.

## Revendications

**1.** Radar comprenant au moins une antenne d'émission constituée de N sous-réseaux élémentaires non directifs dans au moins un plan à l'émission, et une antenne de réception constituée de M sous-réseaux élémentaires, les émissions des sous-réseaux sont orthogonales entre elles du fait de leur séparation fréquentielle et chaque émission couvre une sous-bande de même largeur $\Delta F/N$, lesdites sous-bandes correspondantes étant disjointes les unes des autres, le radar comportant :

Au niveau de l'antenne d'émission

Un sous-réseau élémentaire (12i) de l'antenne d'émission (10) est relié à un générateur de forme d'onde (31 i),

Au moins un oscillateur (30) est en liaison avec les N générateurs de forme d'onde (31 i) associés aux N sous-réseaux élémentaires, formant un ensemble adapté à générer pour chacun des sous-réseaux élémentaires une forme d'onde telle que chacun des sous-réseaux élémentaires émet des signaux continus ou quasi-continus selon un motif temporel et périodique de façon telle que :

• Le motif d'émission couvre une bande passante ΔF pendant une durée donnée Tm,

• Le motif d'émission est composé de N sous-motifs différents les uns des autres, la durée d'un motif étant égale à Tm/N et couvre une sous-bande de la bande de fréquence totale ΔF,

• Les motifs émis par les différents sous-réseaux se déduisent les uns des autres par retards élémentaires qui sont des multiples de Tm/N, les N sous-motifs émis par les sous-réseaux étant différents pendant chaque intervalle de temps de durée Tm/N,

Au niveau de l'antenne de réception

Chacun des M sous-réseaux élémentaires de l'antenne de réception est adapté à capter les signaux réfléchis issus de l'émission des N sous-réseaux élémentaires de l'antenne d'émission,

L'antenne de réception comprenant des moyens adaptés à réaliser une compression du signal reçu dans l'espace et dans le temps.

2. Radar selon la revendication 1 **caractérisé en ce que** l'oscillateur (30) est adapté pour générer au niveau des sous-réseaux élémentaires des émissions simultanées dans des bandes de fréquence différentes et disjointes.

3. Radar selon la revendication 1 **caractérisé en ce que** chaque sous-réseau est adapté pour couvrir l'ensemble de la bande passante ΔF au cours d'un motif Tm.

4. Radar selon la revendication 1 **caractérisé en ce que** le motif d'émission est une rampe de fréquence.

5. Radar selon l'une des revendications précédentes **caractérisé en ce que** les N générateurs de forme d'onde (31 i) sont indépendants.

6. Radar selon l'une des revendications précédentes **caractérisé en ce qu'**il comporte au niveau de la réception des moyens de filtrage fréquentiel adaptés à réduire les fuites d'émission des différents sous réseaux d'émission.

7. Radar selon l'une des revendications précédentes **caractérisé en ce qu'**il comporte un seul oscillateur pilote (30) en liaison avec les N générateurs d'onde, ledit oscillateur étant adapté à réaliser la synchronisation d'émission des motifs.

8. Radar selon l'une des revendications précédentes **caractérisé en ce qu'**il comporte une fonction radar SAR.

9. Procédé permettant d'atténuer la détection d'un radar **caractérisé en ce qu'**il est mis en oeuvre au sein d'un radar selon l'une des revendications 1 à 8 et **en ce qu'**il consiste à étaler l'énergie produite par un radar dans le temps, l'espace et le domaine fréquentiel.

10. Procédé selon la revendication 9 **caractérisé en ce qu'**il comporte au moins les étapes suivantes :

• Au niveau d'une antenne d'émission constituée de N sous-réseaux élémentaires (12i), non directifs dans au moins un plan à l'émission, reliés chacun à un générateur de forme d'onde (31 i),

∘ générer pour chacun des sous-réseaux élémentaires une forme d'onde telle que chacun des sous-réseaux élémentaires émet des signaux continus ou quasi-continus selon un motif temporel et périodique de façon telle que :

▪ on utilise un motif d'émission couvrant une bande passante ΔF pendant une durée Tm,

▪ le motif d'émission est composé de N sous-motifs différents les uns des autres, la durée d'un motif étant égale à Tm/N,

▪ les motifs émis par les différents sous-réseaux se déduisent les uns des autres par retards élémentaires qui sont des multiples Tm/N, les N sous-motifs émis par les sous-réseaux étant différents pendant chaque intervalle de temps de durée Tm/N,

• Au niveau de l'antenne de réception comprenant M sous-réseaux élémentaires adaptés à capter les signaux réfléchis issus de l'émission des N sous-réseaux élémentaires de l'antenne d'émission,

◦ réaliser une compression du signal reçu dans l'espace et dans le temps des signaux reçus.

**Patentansprüche**

1. Radar, umfassend mindestens eine Sendeantenne, bestehend aus N nicht direktiven elementaren Unter-Netzwerken in mindestens einer Sendeebene, und eine Empfangsantenne, bestehend aus M elementaren Unter-Netzwerken, wobei die Sendungen der Unter-Netzwerke aufgrund ihrer Frequenztrennung untereinander orthogonal sind und jede Sendung ein Unterband derselben Breite ΔF/N abdeckt, wobei die entsprechenden Unterbänder voneinander getrennt sind, wobei der Radar aufweist:

   Im Bereich der Sendeantenne
   Ein elementares Unter-Netzwerk (12i) der Sendeantenne (10) ist mit einem Wellenformgenerator (31i) verbunden.
   Mindestens ein Oszillator (30) ist mit den N Wellenformgeneratoren (31i) verbunden, die den N elementaren Unter-Netzwerken zugeordnet sind, wobei eine Einheit gebildet wird, die ausgebildet ist, um für jedes der elementaren Unter-Netzwerke eine Wellenform zu generieren, so dass jedes der elementaren Unter-Netzwerke kontinuierliche oder quasi-kontinuierliche Signale gemäß einem temporären und periodischen Motiv sendet, so dass:

      • das Sendemotiv eine Bandbreite ΔF während einer bestimmten Dauer Tm abdeckt,
      • das Sendemotiv aus N voneinander unterschiedlichen Untermotiven gebildet ist, wobei die Dauer eines Motivs gleich Tm/N ist und ein Unterband des gesamten Frequenzbands ΔF abdeckt,
      • die von den verschiedenen Unter-Netzwerken gesendeten Motive sich voneinander durch elementare Verzögerungen ableiten, die Vielfache von Tm/N sind, wobei die von den Unter-Netzwerken gesendeten N Unteimotive während jedes Zeitintervalls der Dauer Tm/N unterschiedlich sind,

      Im Bereich der Empfangsantenne
      Jedes der M elementaren Unter-Netzwerke der Empfangsantenne ist ausgebildet, um die reflektierten, von der Sendung der N elementaren Unter-Netzwerke der Sendeantenne ausgehenden Signale aufzufangen,
      wobei die Empfangsantenne Mittel aufweist, die ausgebildet sind, um eine Kompression des empfangenen Signals in Raum und Zeit durchzuführen.

2. Radar nach Anspruch 1, **dadurch gekennzeichnet, dass** der Oszillator (30) ausgebildet ist, um im Bereich der elementaren Unter-Netzwerke simultane Sendungen in unterschiedlichen und voneinander getrennten Frequenzbändern zu generieren.

3. Radar nach Anspruch 1, **dadurch gekennzeichnet, dass** jedes Unter-Netzwerk ausgebildet ist, um die gesamte Bandbreite ΔF während eines Motivs Tm abzudecken.

4. Radar nach Anspruch 1, **dadurch gekennzeichnet, dass** das Sendemotiv eine Frequenzrampe ist.

5. Radar nach einem der vorangehenden Ansprüche, **dadurch gekennzeichnet, dass** die N Wellenformgeneratoren (31i) unabhängig sind.

6. Radar nach einem der vorangehenden Ansprüche, **dadurch gekennzeichnet, dass** er im Bereich des Empfangs Frequenzfiltermittel aufweist, die ausgebildet sind, um die Sendeverluste der verschiedenen Sende-Unter-Netzwerke zu reduzieren.

7. Radar nach einem der vorangehenden Ansprüche, **dadurch gekennzeichnet, dass** er einen einzigen Lenk-Oszillator (30) in Verbindung mit den N Wellengeneratoren aufweist, wobei der Oszillator ausgebildet ist, um die Sendesynchronisierung der Motive durchzuführen.

8. Radar nach einem der vorangehenden Ansprüche, **dadurch gekennzeichnet, dass** er eine SAR-Radarfunktion aufweist.

9. Verfahren, das erlaubt, die Detektion eines Radars abzuschwächen, **dadurch gekennzeichnet, dass** es innerhalb eines Radars nach einem der Ansprüche 1 bis 8 umgesetzt wird und dass es darin besteht, die von einem Radar produzierte Energie in Raum, Zeit und im Frequenzgebiet zu streuen.

10. Verfahren nach Anspruch 9, **dadurch gekennzeichnet, dass** es mindestens die folgenden Schritte aufweist:

- im Bereich einer Sendeantenne, die aus N elementaren, in mindestens einer Sendeebene nicht direktiven, jeweils mit einem Wellenformgenerator (31i) verbundenen Unter-Netzwerken (12i) besteht,

  ∘ Generieren, für jedes der elementaren Unter-Netzwerke, einer Wellenform, so dass jedes der elementaren Unter-Netzwerke kontinuierliche oder quasi-kontinuierliche Signale gemäß einem zeitlichen und periodischen Modell sendet, so dass:

    ■ ein Sendemotiv verwendet wird, das eine Bandbreite ΔF während einer Dauer Tm abdeckt,
    ■ das Sendemotiv aus N voneinander unterschiedlichen Untermotiven zusammengesetzt ist, wobei die Dauer eines Motivs gleich Tm/N ist,
    ■ die von den verschiedenen Unter-Netzwerken gesendeten Motive sich voneinander durch elementare Verzögerungen ableiten, die Vielfache von Tm/N sind, wobei die von den Unter-Netzwerken gesendeten N Unteimotive während jedes Zeitintervalls der Dauer Tm/N unterschiedlich sind,

  - im Bereich der Empfangsantenne, die M elementare Unter-Netzwerke umfasst, die ausgebildet sind, um die reflektierten, von der Sendung der N elementaren Unter-Netzwerke der Sendeantenne ausgehenden Signale aufzufangen,

    ∘ Durchführen einer Kompression des empfangenen Signals in Raum und Zeit der empfangenen Signale.

**Claims**

1. A radar comprising at least one transmit antenna consisting of N individual subarrays that are non-directional in at least one plane in transmission, and a receive antenna consisting of M individual subarrays, the transmissions of the subarrays are orthogonal to one another by virtue of their frequency separation and each transmission covers a sub-band of the same width ΔF/N, said corresponding sub-bands being separated from one another, the radar comprising:

   On the transmit antenna
   An individual subarray (12i) of the transmit antenna (10) is connected to a waveform generator (31 i),
   At least one oscillator (30) is connected to the N waveform generators (31 i) associated with the N individual subarrays, forming an assembly adapted to generate, for each of the individual subarrays, a waveform such that each of the individual subarrays transmits continuous or quasi-continuous signals according to a temporal and periodic pattern such that:

   - The transmission pattern covers a bandwidth ΔF for a given duration Tm,
   - The transmission pattern is made up of N mutually different sub-patterns, the duration of a pattern being equal to Tm/N, and covers a sub-band of the total frequency band ΔF,
   - The patterns transmitted by the different subarrays are deduced from one another by individual delays which are multiples of Tm/N, the N sub-patterns transmitted by the subarrays being different during each time interval of duration Tm/N,

   On the receive antenna
   Each of the M individual subarrays of the receive antenna is adapted to pick up the reflected signals obtained from the transmission of the N individual subarrays of the transmit antenna,
   The receive antenna comprising means adapted to perform a compression of the received signal in space and in time.

2. The radar as claimed in claim 1, **characterized in that** the oscillator (30) is adapted to generate, on the individual subarrays, simultaneous transmissions in different and separate frequency bands.

3. The radar as claimed in claim 1, **characterized in that** each subarray is adapted to cover all of the bandwidth ΔF during a pattern Tm.

4. The radar as claimed in claim 1, **characterized in that** the transmission pattern is a frequency ramp.

5. The radar as claimed in one of the preceding claims, **characterized in that** the N waveform generators (31 i) are independent.

6. The radar as claimed in one of the preceding claims, **characterized in that** it comprises, in reception, frequency filtering means adapted to reduce the transmission leaks of the different transmit subarrays.

7. The radar as claimed in one of the preceding claims, **characterized in that** it comprises a single pilot oscillator (30) connected to the N wave generators, said oscillator being adapted to perform the pattern transmission synchronization.

8. The radar as claimed in one of the preceding claims, **characterized in that** it comprises an SAR radar function.

9. A method for attenuating the detection of a radar, **characterized in that** it is implemented in a radar as claimed in one of claims 1 to 8 and **in that** it consists in spreading the energy produced by a radar in time, space and the frequency domain.

10. The method as claimed in claim 9, **characterized in that** it comprises at least the following steps:

   • On a transmit antenna consisting of N individual subarrays (12i) that are non-directional in at least one plane in transmission, each connected to a waveform generator (31 i),

   ◦ generating, for each of the individual subarrays, a waveform such that each of the individual subarrays transmits continuous or quasi-continuous signals according to a temporal and periodic pattern such that:

   ▪ a transmission pattern is used that covers a bandwidth ΔF for a duration Tm,
   ▪ the transmission pattern is made up of N mutually different sub-patterns, the duration of a pattern being equal to Tm/N,
   ▪ the patterns transmitted by the different subarrays are deduced from one another by individual delays which are Tm/N multiples, the N sub-patterns transmitted by the subarrays being different during each time interval of duration Tm/N,

   • On the receive antenna comprising M individual subarrays adapted to pick up the reflected signals obtained from the transmission of the N individual subarrays of the transmit antenna,

   ◦ performing a compression of the received signal in space and in time of the received signals.

Signal émis par un sous
  réseau élémentaire

Motif 1
Bande
couverte
ΔF

Motif 2
Identique
au motif 1

$O_i$

Motif  P

Tm

T

t

Train d'onde émis par le sous réseau de rang i

FIG.1

Signal émis par un sous
  réseau élémentaire

Sous
Motif 1
bande
couverte
ΔF/N

Sous
Motif i
bande
couverte
ΔF/N

Sous
Motif N
bande
couverte
ΔF/N

Tm/N

Tm

t

Motif élémentaire : bande couverte : ΔF

FIG.3

FIG.2

EP 2 834 664 B1

Occupation spectrale

ΔF

| | | | | | | | |
|---|---|---|---|---|---|---|---|
| Sous réseau N | Sous réseau 1 | Sous réseau 2 | Sous réseau 3 | Sous réseau 4 | Sous réseau 5 | Sous réseau 6 | Sous réseau 7 |
| Sous réseau 7 | Sous réseau N | Sous réseau 1 | Sous réseau 2 | Sous réseau 3 | Sous réseau 4 | Sous réseau 5 | Sous réseau 6 |
| Sous réseau 6 | Sous réseau 7 | Sous réseau N | Sous réseau 1 | Sous réseau 2 | Sous réseau 3 | Sous réseau 4 | Sous réseau 5 |
| Sous réseau 5 | Sous réseau 6 | Sous réseau 7 | Sous réseau N | Sous réseau 1 | Sous réseau 2 | Sous réseau 3 | Sous réseau 4 |
| Sous réseau 4 | Sous réseau 5 | Sous réseau 6 | Sous réseau 7 | Sous réseau N | Sous réseau 1 | Sous réseau 2 | Sous réseau 3 |
| Sous réseau 3 | Sous réseau 4 | Sous réseau 5 | Sous réseau 6 | Sous réseau 7 | Sous réseau N | Sous réseau 1 | Sous réseau 2 |
| Sous réseau 2 | Sous réseau 3 | Sous réseau 4 | Sous réseau 5 | Sous réseau 6 | Sous réseau 7 | Sous réseau N | Sous réseau N |
| Sous réseau 1 | Sous réseau 2 | Sous réseau 3 | Sous réseau 4 | Sous réseau 5 | Sous réseau 6 | Sous réseau 7 | Sous réseau N |

f+7ΔF/N
f+6ΔF/N
f+5ΔF/N
f+4ΔF/N
f+3ΔF/N
f+2ΔF/N
f+ΔF/N
f

t

Tm

Bande couverte : ΔF

FIG.4

N Sous réseaux
élémentaires (N=8)

$12_2$          $12_5$

10

FIG.5A

M Sous réseaux
élémentaires, (M=12)

20

$22_2$          $25_5$

FIG.5B

FIG.6

FIG.7

FIG.8

FIG.9

Emission - Réception

aisin($\theta$)

Antenne
d'émission

Sous réseau 1

Sous réseau 2

$\theta$

Sous réseau i

D(t)

4C

a

FIG.10

EP 2 834 664 B1

Signal reçu du sous réseau j : Sj(t)

CAN — 41

Image du signal émis sur le sous réseau i : Xi*(t)

42

43 — FFT (compression d'impulsion sur axe distance)

44 — Formation de faisceau à l'émission

FIG.11

EP 2 834 664 B1

22j

Sj(t)

Image du signal émis sur le
sous réseau i : Xi$^*$(t)

⊗

51

52

| ΔF/2N | 3ΔF/2 | 5ΔF/2N | 7ΔF/2N | 9ΔF/2N | 11ΔF/2N | 13ΔF/2N | (2N-1)ΔF/2N |
| ΔF/N | ΔF/N | ΔF/N | ΔF/N | ΔF/N | ΔF/N | ΔF/N | ΔF/N |

53

| CAN | CAN | CAN | CAN | CAN | CAN | CAN | CAN |

54

| FFT | FFT | FFT | FFT | FFT | FFT | FFT | FFT |

Formation de faisceau à l'émission

55

# FIG.12

**EP 2 834 664 B1**

## RÉFÉRENCES CITÉES DANS LA DESCRIPTION

**Documents brevets cités dans la description**

- EP 2296006 A